# EUROPEAN PATENT SPECIFICATION

(11) **EP 1 291 075 B1**
(45) Date of publication and mention of the grant of the patent: **11.04.2007**
(21) Application number: 02078424.5
(22) Date of filing: 19.08.2002
(51) Int. Cl.: B01J 19/00, B29C 45/44

(54) **Reaction block for parallel synthetic chemistry and vessel therefor**
Reaktionsblock für parallele Synthesechemie und Gefäss dafür
Bloc de réaction pour la chimie de synthèse en parallèle et récipient pour cela

(30) Priority: 07.09.2001 EP 01810859
(43) Date of publication of application: 12.03.2003
(73) Proprietor: F. HOFFMANN-LA ROCHE AG, 4070 Basel (CH)
(72) Inventor: Voegelin, Dieter, 4450 Sissach (CH); Bär, Roman, 4132 Muttenz (CH); Müller, Claus, 68220 Hegenheim (FR)
(74) Representative: Ventocilla, Abraham

(56) References cited:
- EP-A- 0 347 837
- WO-A-97/04863
- WO-A-98/57739
- DE-A- 19 915 811
- DE-B- 1 171 178
- GB-A- 1 064 901
- US-A- 4 567 021
- US-A- 4 605 536
- US-A- 5 746 982
- PATENT ABSTRACTS OF JAPAN vol. 1999, no. 11, 30 September 1999 (1999-09-30) & JP 11 165063 A (SHIMADZU CORP), 22 June 1999 (1999-06-22) & DATABASE WPI Section Ch, Week 199935 Derwent Publications Ltd., London, GB; Class J04, AN 1999-412156 & JP 11 165063 A (SHIMADZU CORP.), 22 June 1999 (1999-06-22)
- PATENT ABSTRACTS OF JAPAN vol. 012, no. 274 (M-725), 29 July 1988 (1988-07-29) & JP 63 056420 A (FUKURAITO KK), 11 March 1988 (1988-03-11) & DATABASE WPI Section Ch, Week 198816 Derwent Publications Ltd., London, GB; Class A32, AN 1988-108424 & JP 63 056420 A (FUKURAITO K.K.)

## Description

The present invention relates to a reaction vessel according to the preamble of claim 1.

The present invention relates in particular to a reaction vessel for use in parallel synthetic chemistry and other chemical application where a multiplicity of chemical reactions has to be performed in small reaction medium volumes.

The invention further relates to a method for manufacturing such a reaction vessel.

The invention further relates to a reaction block comprising such a reaction vessel.

The invention further relates to a parallel reaction assembly comprising such a reactor block.

Combinatorial chemical synthesis requires performing simultaneously a multitude of chemical reactions. Often the problem of separating and characterizing the reaction products has to be solved. Therefore, reactor vessel arrays have been developed, where in each vessel one specific reaction or sequence of reactions is performed on one or possibly a small number of educts, so that one or a small number of products are obtained, which may more easily be separated or examined. This type of synthesis is named "parallel synthetic chemistry" due to the relatively large number of reactions performed in parallel.

In order to obtain a high performance, synthesizers which enable performing chemical synthesis in solution, on solid phase or in so-called "tea-bags" etc. are required. A known type of synthesizer is characterized by the following features:
- a dispensing system using one or more dispensing needles (these liquid handling systems were originally used for biological screening or diagnostic techniques);
- a reactor block comprising a number of reactor vessels which allow performing a manifold of chemical reactions at varying temperatures, with shaking and under inert gas; and
- a computer running a specialized software package which allows the programming and control of the individual synthesis steps.

Most known reactor blocks comprise a plurality of small reactor vessels which have a top opening closed by a piercable closure, contain an inert gas atmosphere and are accessible through the closure using a needle. Liquids are added and removed through one and the same access.

Less often reactor vessels are used which allow liquid transfer through the bottom of the reactor vessel using additional valves.

Hence, the known reactor vessels are characterized either by a rather complicate access or a complex structure making them expensive.

Japanese Patent Application with publication No. JP 11165063 describes a reaction vessel for performing chemical reactions simultaneously for use in parallel chemical synthesis. This reaction vessel has a body made of a polymeric material. The latter body comprises a reaction chamber and a delivery tube, which each have an open upper end and a bottom portion, and which are fluidically connected with each other by a connection channel.

A first object of the present invention is to provide a reaction vessel which can be manufactured more easily and less costly.

A further object of the invention is to provide a reaction vessel which allows a more convenient exchange of the vessel's contents.

Another object of the invention is to provide a reaction block, which can be used more conveniently, particularly within an automatized system, and is adapted for receiving a reactor vessel array.

According to a first aspect of the invention a reaction vessel that satisfies at least one of the two first-mentioned objects is defined by claim 1.

A reaction vessel according to the invention consists of plastic material and is preferably made by injection molding. It provides a reaction space with an exit connected to a discharge channel. By applying underpressure to the discharge channel, the content of the reaction space, particularly a liquid, can be withdrawn.
Preferably, the exit of the reaction space to the discharge channel is closed by a frit so that the withdrawn liquid is filtered. In this configuration, it is possible to use e. g. loose beads of a solid substrate, e.g. a resin, whereon the reactive component is immobilized.

According to a second aspect of the invention a method for manufacturing a reaction vessel is defined by claim 16.

According to a third aspect of the invention a reactor block for performing a multiplicity of chemical reactions simultaneously, particularly for use in parallel synthetic chemistry is defined by claim 22..

According to a fourth aspect of the invention a parallel reaction assembly comprises a reactor block and reaction vessels according to the invention.

The reaction block according to the invention has been specifically designed in view of automatization and ease of use. In this context, the closing mechanism has been realized by a movable closure means which is guided by guiding means of the block. The closure means extends over a subset of the vessels contained in the block, e. g. one row, and comprises means for enabling access to the openings of the reaction vessels and for closing them, e.g. openings in the closure means alignable with the openings of the reaction vessel and sealing surfaces for closing the reaction vessels.

Furthermore, the guiding means comprise redirecting means, like gates (grooves) or a lever mechanism interacting with corresponding means provided at the closure means. The redirecting means convert a substantially linear movement of the closure means at least near the closing end position in a movement towards the openings of the reaction vessels in order to close them. Preferably, the closure means is further urged against the openings to improve the tightness even if overpressure develops in the vessels.

The subject invention will now be described in terms of its preferred embodiments with reference to the accompanying drawings. These embodiments are set forth to aid the understanding of the invention, but are not to be construed as limiting.
- Fig. 1a: shows a cross-sectional view of a reactor vessel along line I-I in Fig 1b;
- Fig. 1b: shows a top view of a reactor vessel;
- Fig. 1c: shows an enlarged partial cut along line I-I in Fig. 1b, also showing a withdrawal needle tip;
- Fig. 2: shows a view perspective exploded view of a reactor block;
- Fig. 3: shows a top view of the reactor block in Fig. 2;
- Fig. 4: shows a cross-sectional view along line A-A in Fig. 3;
- Fig. 5: shows a cross-sectional view along line B-B in Fig. 3;
- Fig. 6: shows a cross-sectional view along line C-C in Fig. 3;
- Fig. 7: shows a side view of the reactor block, showing the locking mechanism in opened position, according to arrow D in Fig. 3; and
- Fig. 8: shows a side view of the reactor block, showing the locking mechanism in closed position, according to arrow E in Fig. 3.

### REFERENCE NUMBER LIST

- 1: reaction vessel
- 2:
- 3: reaction chamber
- 4:
- 5:
- 6: discharge channel
- 7: orifice of connection channel 14
- 8: seat
- 9: wall
- 10: frit
- 11: orifice of connection channel 14
- 12: lower end of discharge channel 5
- 13:
- 14: connection channel
- 15: collar
- 16: upper opening of discharge channel 5
- 17: upper opening of reaction chamber 3
- 18: upper rim of vessel 1
- 19: channel or groove
- 20: tapering portion of discharge channel 5
- 21: reactor block
- 22: basis
- 23: connector
- 24: connector
- 25:
- 26: site
- 27:
- 28:
- 29: vessel holder
- 30:
- 31: seat
- 32:
- 33: shoulder/depression
- 34:
- 35: upper surface of holder 29
- 36: sealing foil/plate
- 37: slider gate plate
- 38:
- 39: hole
- 40: hole
- 41:
- 42: hole
- 43: hole
- 44:
- 45: collar
- 46:
- 47:
- 48: slot
- 49:
- 50: wall
- 51:
- 52: gate
- 53:
- 54:
- 55: closure slider
- 56:
- 57: pin
- 58: end of gate
- 59:
- 60: conduit
- 61:
- 62: bottom of site 26
- 63:
- 64: hole
- 65: hole
- 66: slider
- 67: slider
- 68:
- 69:
- 70: front surface part of gate
- 71:
- 72: front wall
- 73:
- 74:
- 75:
- 76: rear part of gate
- 77:
- 78:
- 79: lower surface of slider
- 80:

- 201: needle

### DETAILED DESCRIPTION OF PREFERRED EMBODIMENTS

### REACTION VESSEL

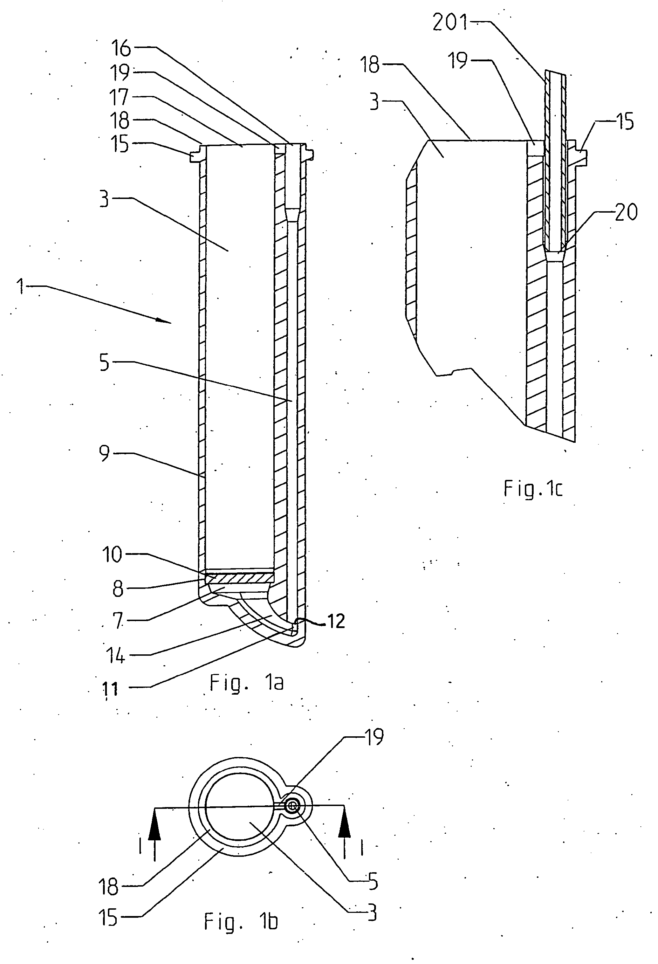

Fig. 1a shows a longitudinal section through a reaction vessel 1, Fig. 1b a top view on it. The body of vessel 1 is preferably made of a thermoplastic material, e.g. a polymeric material which is shapable by injection molding and which is inert under the conditions of the intended reactions. Preferred vessel body materials are polypropylene or a fluorinated polymer like e.g. a poly-co-ethylene-tetrafluoroethylene, particularly the one marketed under the tradename TEFZEL (DuPont).

The body of vessel 1 comprises a reaction chamber 3 and a discharge channel 5. Discharge channel 5 has an exit opening 16 and a bottom portion. Reaction chamber 3 has an upper opening 17 and a bottom portion. Upper opening 17 of reaction chamber 3 and exit opening 16 of discharge channel 5 are located at the upper rim 18 of reaction vessel 1.

As shown by Fig. 1a, discharge channel 5 is arranged preferably parallel or substantially parallel to the length axis of reaction chamber 3, and a connection channel part 14 fluidically connects discharge channel 5 with the space within reaction chamber 3 where a reaction medium is received. Reaction medium contained in reaction chamber 3 can thus be withdrawn through channel part 14 into discharge channel 5. Channel part 14 has a first orifice 7 located near to or at the bottom of reaction chamber 3, a second orifice 11 located at the lower end 12 of discharge channel a bent, tapered shape with the narrow end at the lower end 12 of discharge channel 5.

In a preferred embodiment shown by Fig. 1a, discharge channel 5 substantially extends within and along a lateral wall of reaction chamber 3. In another embodiment (not represented in the drawings) discharge channel 5 substantially extends on the outer surface of and along a lateral wall of reaction chamber 3.

A seat 8 is provided in the wall 9 of reaction vessel 1 at the level of orifice 7 of connection channel part 14. A frit 10 is placed in seat 8. Frit 10 constitutes the bottom wall of the reaction chamber 3 and serves as a filter during discharging of the reaction chamber 3. Frit 10 thus constitutes a delimitation of reaction chamber 3 and preferably a delimitation of the bottom of reaction chamber 3.

Reaction vessel 1 has a collar 15 near its upper rim 18. Collar 15 serves as an abutment when vessel 1 is inserted in a reaction block as described hereinafter.

Inlet opening 17 of reaction chamber 3 and exit opening 16 of discharge channel 5 are interconnected by a channel or groove 19, which equalizes any pressure difference between reaction chamber 3 and discharge channel 5 of reaction vessel 1.

When a needle 201 is introduced through exit opening 16 of discharge channel 5 and positioned as shown by Fig. 1c for withdrawing the liquid contents of reaction vessel 1 through discharge channel 5, the tip of needle 201 is in sealing contact with a tapering portion 20 of the discharge channel 5. Thereby, channel 19 is fluidically disconnected from discharge channel 5, and by applying underpressure to discharge channel through needle 201, the reaction vessel can be emptied.

Reaction vessel 1 may be conveniently manufactured by injection molding. Reaction chamber 3 and connection channel 14 are shaped by a core with a hingedly attached extension for the connection 14. The vertical part of discharge channel 5 is shaped by a second core. In the closed state of the injection molding tool, the cores are inserted into the molding space, the hingedly attached extension abutting on the end of the second core whereby the mold part for the hollow interior of the discharge conduit is constituted.

After injection molding, the cores are withdrawn. For this purpose, the extension of the first core makes a rotational movement on its hinge. The removal is facilitated by the significantly tapered shape of the connection channel 14. For even better removal of the cores, the walls of reaction chamber 3 and/or the discharge channel 5 are preferably slightly inclined so that their cross sections decrease from their upper opening 17 respectively exit opening 16 towards their respective bottom portions. The inclination of the walls of the reaction chamber can be so small that its cross-section can be considered to be constant along the length of the reaction chamber. This configuration of reaction chamber 3 and discharge channel makes possible to retract the above mentioned first and second molding cores through upper opening 17 and exit opening 16 respectively.

As molds of the above-mentioned kind, even including the mentioned cores, are known to persons skilled in the art, a detailed description of such molds with reference to figures is deemed unnecessary and, therefore, not included in the present specification.

From what is explained above, it is evident that reaction vessel 1 is suitable for being manufactured in series at a low price.

With regard to a preferred use of reaction vessel 1, another advantage consists in that when a reaction is terminated, the liquid contents of reaction chamber 3 can be sucked off through frit 10 and discharge channel 5 by applying vacuum to exit opening 16. In the solid-liquid reaction arrangement most often used in combinatorial chemistry, the reaction partners immobilized on a solid support are retained in the reaction chamber 3 as a "filter cake" on frit 10.

In case that frit 10 is jammed, it is possible to blow an inert gas, e. g. argon, in the reverse direction (opposite to flow direction when contents of reaction chamber is sucked through frit 10, connection channel 14 and discharge channel 5) through frit 10 for restituting the permeability of frit 10. The above mentioned injection of gas may also be used for stirring the contents of the reaction chamber.

Experiments have shown that the above described structure of reaction vessel 1 may withstand significant inner overpressure. Reaction vessel 1 thus allows to perform reactions even under overpressure without a venting provision, e. g. to work at an elevated temperature with respect to the temperature during filling.

In a preferred use of reaction vessel 1, the above mentioned overpressure is generated by closing the vessel and increasing the temperature.

Typical dimensions of the reaction vessel 1 are:

| | | |
|---|---|---|
| Cross-sectional area of the reaction chamber: | | 10 to 1000 mm² |
| | preferably | 75 to 120 mm² |
| Length of reaction chamber: | | at least 10 mm |
| | preferably | 20 to 200 mm |
| Cross-sectional area of the discharge channel: | | at least 0.8 mm² |
| | preferably | 0.8 to 25 mm² |

Generally, the cross-sectional area of discharge channel 5 is significantly smaller than the cross-sectional area of reaction chamber 3.

As can be recognized from the above-description, reaction vessel 1 shown by Figures 1a-1c may be conveniently manufactured by injection molding as an integrally manufactured single-piece element, with exception of frit 10 inserted therein.

### METHOD FOR MANUFACTURING THE REACTION VESSEL

A method for manufacturing the above-described reaction vessel 1 comprises making the body of vessel 1 by injection molding of a polymeric material, whereby
the interior of discharge channel 5 is shaped by a first core and the interior of reaction chamber 3 is shaped by a second core,
the first and second cores are moved into the mold before injection of the polymeric material and are retracted during opening of the mold,
said second core which shapes the reaction chamber bears a movable extension at the end thereof which forms the bottom of the reaction chamber, and
said extension touches the first core which shapes the discharge channel when said first and second core are moved into the mold in order to mold the connection channel between the reaction chamber and the discharge channel.

### REACTOR BLOCK

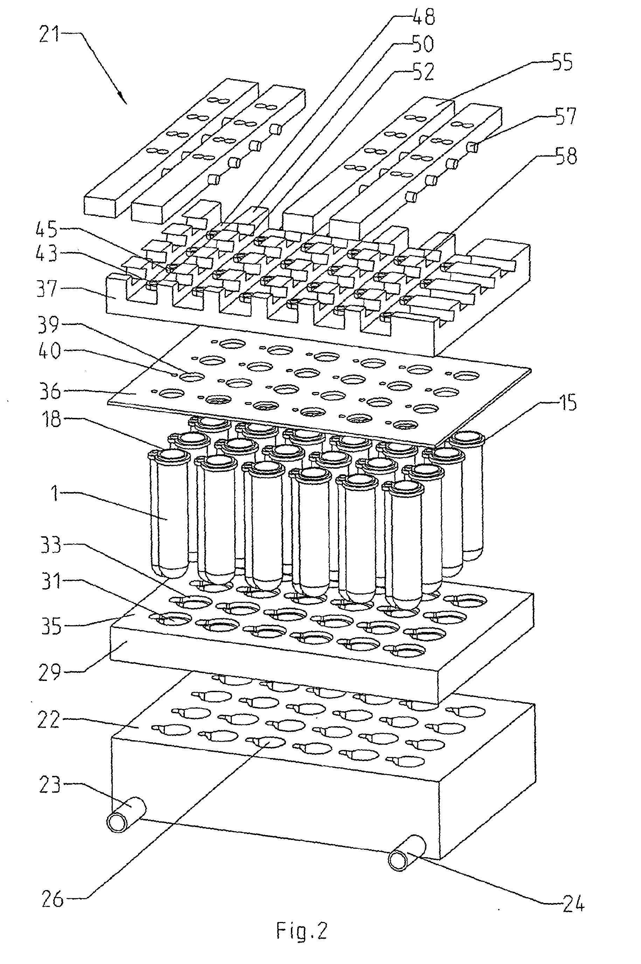

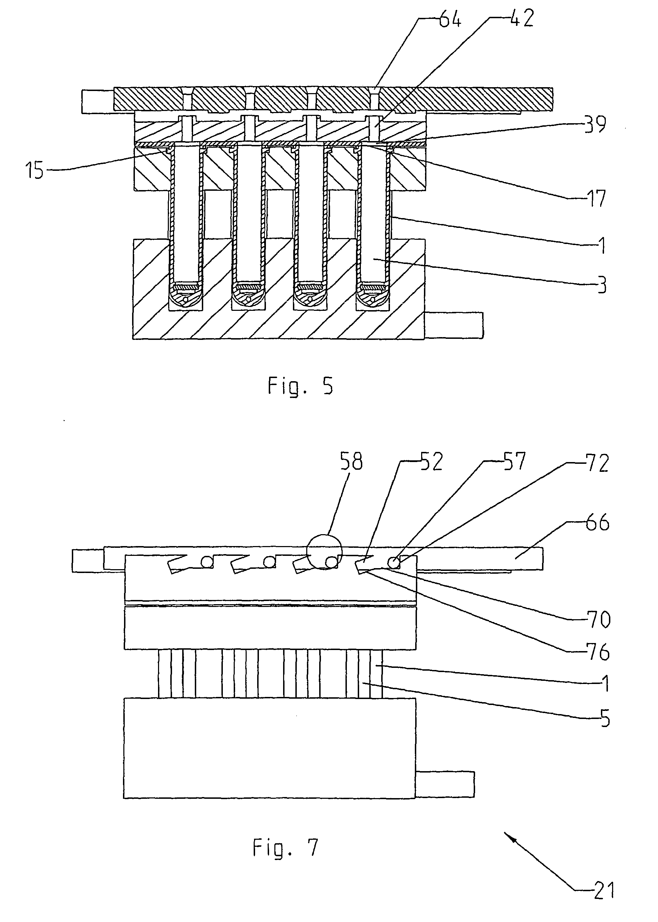

Fig. 2 shows an exploded view of a reactor block 21 containing 24 reaction vessels 1. Reactor block 21 consists of a basis 22 with an integrated conduit (connectors 23 and 24) for temperature control. Basis 22 comprises receiving sites 26 each adapted for receiving a reaction vessel 1. Heat is exchanged by air between the reaction vessels 1 and the walls of receiving sites 26. For an efficient thermal contact, the sites 26 are shaped closely similar to the exterior surface of the vessels 1. As shown by Fig. 4, heat exchange (normally heating) is however substantially restricted to the lower part of the reaction vessels 1 in order that vaporized liquid may condensate in the cooler upper part of the reaction vessels and flow back into the reaction volume proper located above frit 10 (reflux condensation).

A vessel holder 29 is arranged above the basis 22 and held by an appropriate, adjustable means (not shown) so that the vessels extend into the basis 22 without touching the bottom of their receiving sites 26 in order to compensate for thermal expansion and manufacturing tolerances.

Vessel holder 29 comprises an array of at least two rows of at least two seats 31 for reaction vessels. Each of seats 31 has a circumferential shoulder or depression 33 for receiving the collar 15 of a reaction vessel 1. The upper rims 18 of reaction vessels 1 project a little bit above the upper surface 35 of vessel holder 29. Being arranged outside of the reaction chamber's wall, Due to the relative position of the discharge channel 5 with respect to the reaction chamber 3 of each vessel, discharge channel 5 also serves as positioning means which allow insertion of the reaction vessels 1 in one orientation only so that the upper openings 17 of the reaction chambers 3 and the exit openings 16 of the discharge channels 5 are always and mandatorily in the same predetermined position. This is important for the use of reactor block 21 with automated handlers, e. g. synthesizers or analyzers.

A sealing foil or plate 36 and a slider gate plate 37 are placed on top of the vessels 1, the slider gate plate 37 being firmly pressed against the holder 29 so that preferably a gas-tight sealing, or at least a fluid-tight sealing between the seal 36, the rim 18 of the vessels 1 and the slider gate plate 37 is obtained. Slider gate plate 37 has guiding slots 48.

The seal 36 and the slider gate plate 37 each provide two corresponding holes for each vessel, namely a first hole 39respectively a second 42 hole corresponding to upper opening 17 of reaction chamber 3 and a third hole 40 respectively a fourth hole 43 corresponding to the exit opening 16 of discharge channel 5. The upper ends of holes 42, 43 in the slider gate plate 37 are surrounded by a collar 45 whose upper rim serves as a sealing surface as will be explained below. Another advantageous effect of collar 45 is that it prevents that any matter spoiled in a slot 48 may flow into the open reaction vessels.

The reaction vessels 1 are preferably arranged in six rows of 4 vessels each (corresponding to an ancient 24-well plate). Slider gate plate 37 has a slider guiding slot 48 for each row of vessels 1. The walls 50 of the slots 48 contain gates 52, i.e. guiding grooves or channels for closure sliders 55 (four of six necessary sliders 55 are shown).

Closure sliders 55 have a shape that allows them to slide neatly within the guiding slots 48. Their lateral faces comprise pins 57 which are adapted to be slidably registered in the gates 52. For assembly purposes, gates 52 are open at one end 58 so that the pins 57 of the sliders 55 may be inserted into gates 52 from above.

Fig. 4 shows in a sectional view some aspects mentioned above more clearly with, but the reaction vessels 1 are merely schematically shown. Conduits 60 for the temperature control medium are arranged in basis 22. Vessels 1 are held by the holder 29 in a pending manner and extend into receiving sites 26 of basis 22 without touching the bottom 62 thereof. Seal 36 is pinched between slider gate plate 37 and the upper rim 18 of the reaction vessels 1 whereby the collars 15 of the vessels 1 are pressed down in the depressions 33.

The exit openings 16 of discharge channels 5 and the open upper ends 17 of reaction chambers 3 are accessible through holes 40 respectively 39 in seal 36 and holes 43 respectively 42 in slider plate 37. Depending on the position of the sliders 55, holes 42, 43 are accessible from the exterior through holes 64 respectively 65 (see slider 66 on the left), or closed altogether by the slider (see slider 67 on the right) as explained more in detail below.

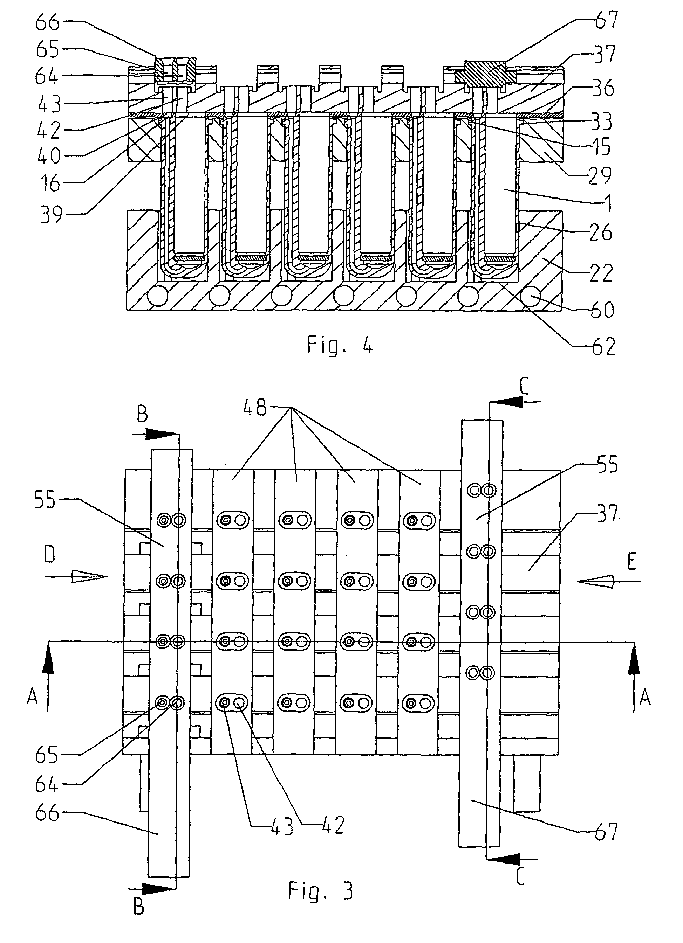

Fig. 3 shows a top view of reactor block 21 and in particular of slider gate plate 37. For the sake of simplicity, four slider slots 48 in the middle are shown without sliders. Slider 66 on the left side is in open position allowing access to the reactor vessels located below by registering its holes 64, 65 with the holes 42, 43 in slider gate plate 37. Slider 67 on the right side is in closed position, i.e. a position at which the reaction vessels located below are almost hermetically sealed, e. g. for performing the reactions.

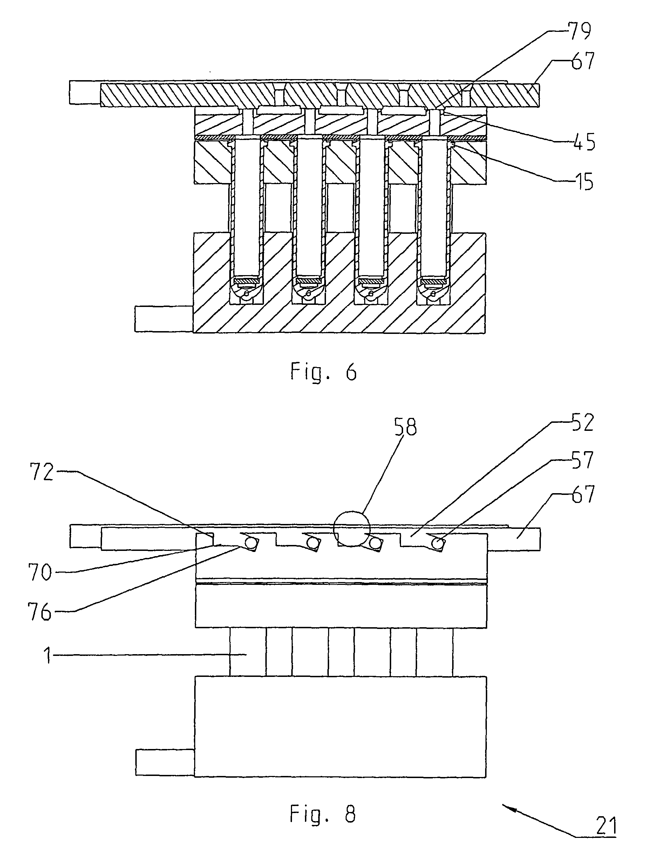

As shown in Figs. 5 and 6, slider 66 is not only moved along guiding slot 48, but abides in a slightly elevated position due to the pins 57 resting on the front surface part 70 of the gates 52. At the same time, in abutting against the front wall 72, the movement of the slider 66 is stopped in the opened position. The holes 64, 65 are aligned, and e. g. by means of a syringe, a medium can be injected into the reaction vessel through holes 64, 42, 39 and the open end 17 of the reaction chamber 3, or withdrawn (not shown) through the holes 65, 43, 40 and the exit opening 16 of the discharge channel 5 (see Fig. 4).

In a preferred embodiment, reaction medium to be removed from reaction chamber 3 of a vessel 1 is removed by applying underpressure or vacuum to the exit opening 16 of discharge channel 5.For this purpose, discharge channel 5 has an upper portion which ends at exit opening 16 and which has a cross-section which is slightly larger than the cross-section of the lower portion of discharge channel and vacuum is applied by means of a needle of a syringe which has a diameter equal or slightly bigger than the diameter of an lower portion of discharge channel 5. When the front end of the syringe needle is inserted into the upper part of discharge channel 5, a tight seal between the needle tip and the wall of the discharge channel 5 is established. For this purpose, the upper portion of discharge channel 5 has preferably a conical part which narrows into the lower portion of discharge channel 5.

In another preferred embodiment, the transition between the lower and the upper part of discharge channel 5 is a single step. In this case a needle or a tube having a transversely cut end is used and this end has a sealing effect when pressed against the step.

Holes 43 and 65 (and 42 and 64) have diameters larger than the conducting means (tube, syringe needle) used to inject or withdraw reaction medium in order to guarantee a free passage of the conducting means.

Fig. 7 shows the open configuration. Fig. 8 shows the closed configuration. As can be appreciated from these figures, during movement of slider 67 to the rear position the pins 57 are forced to move downward along the rear part 76 of gates 52, and therefore the slider 67 as well. Thereby, the end phase of the longitudinal rearward movement of sliders 55 in guiding slots 48 is transformed in a movement towards the reaction vessels 1, and, finally, in a force pressing the lower surface 79 of sliders 55 (exemplarily, slider 67) against the collars 45.

An advantage of the arrangement just described is that a simple, e. g. pneumatic or solenoid, actuator providing a sufficient powerful, yet only linear movement, may be used for moving the sliders from the open to the closed position and vice versa, and even moving of these sliders by hand is significantly facilitated.

As this closing movement of the sliders 55 requires still a minimal lateral movement over collar 45, sliders 55 have a smooth, plane sealing surface 79 in the respective parts of their lower surface. Sliders 55 are preferably entirely made of a suitable polymeric material, e. g. a fluorocarbon type. As sliders 55 may as well be produced by injection molding, possibly with finishing (smoothing) treatment of their sealing surface 79, they may be produced at low price and to use them as disposable components which are thrown away after use.

Due to the fact that sliders 55 are pressed with a rather elevated force against openings 42, 43, the technique used for performing reactions can be simplified: According to the prior art, vaporized solvent has been refluxed in the upper, cooler part of the reaction vessels. Solvent not condensated could escape by a venting provision, normally connected to an inert gas source. In contrast with the latter prior art, when a reactor block according to the invention is used, the reaction vessel may be kept closed, i.e. the reaction is carried out under overpressure. By experiment, it has been found that the whole arrangement including the plastic reaction vessel can withstand without problems the pressures developed within the reaction vessel under normal reaction conditions.

An inert gas blanket may be provided if necessary during exchange of the reaction medium.

Within the scope of the invention a reactor block having the above-described features is used to build a parallel reaction assembly comprising reactions vessels 1 having the above described features. A preferred use of such a parallel reaction assembly is for simultaneously performing a chemical reaction in each reaction vessel in the reactor block.
From the exemplary embodiment set forth above, the one skilled in the art is able to derive numerous variants without leaving the scope of protection which is intended to be solely defined by the appended claims. Some variations that fall within the scope of the invention are e.g.:
- The reaction vessels 1 may consists of other materials, like metal, ceramics, or even glass. Due to their rather simple structure, even with these materials, mass production methods might be used for producing the vessels.
- The sealing plate or foil 36 may be left out if the contact between the reaction vessel and the lower surface of the gate plate 37 provides a sufficient tightness.
- The sliders may be connected to the gate plate by another mechanism, for example using levers, for transforming the movement of the sliders into one urging the sliders 55 against the openings 39, 40, though the solution using pins and gates has proven to be the most reliable due to its simplicity.
- The number of vessels contained in a reactor block may be varied as needed. Particularly preferred are arrangements adapted to the configuration of well plates (e. g. 96 wells, 384 wells) so that by means of a roboter, whole rows of the well plate may be transferred to the reactor's vessels with only simple movements.
- The connection channel 14 may have its ampler orifice close to the discharge channel if the molding core used to form connection channel 14 is to be retracted through the discharge channel. The connection channel may also have a constant cross-section over its length or may have its narrowest cross-section between its two end orifices and the mold used to form the connection channel may in principle be retractable through either the reaction chamber or the discharge channel or both the reaction chamber and the discharge channel.
- The collar 45 may be omitted. Preferably, then, the sealing surfaces are slightly elevated with respect to the surrounding lower surface of the sliders 55 in order to concentrate the closing pressure to the holes 43, 42.
- The preferred arrangement of one pair of pins 57 per vessel which helps to secure a tight seal may be varied in using more or less pins and gates. Particularly if less pins are provided, and the sliders are of some flexibility, additional measures have to be applied for securing a tight seal. Such means may be a rigid back, for instance of metal.
- The hollow interior parts of the reaction vessel may have other cross sections than circular, e.g. tetragonal, hexagonal or elliptic.
- There may be no depression 33 for receiving the collars 15 of the reaction vessels, so that the collars 15 are applied flat to the surface of the vessel holder plate 29 comprising the seats 31.
- The reaction vessel may be useful and used in any application, where exchange of a reaction chamber's contents by sucking off is needed. This includes individually performing reactions in a single reaction vessel.
- Instead of a pressure equalizing channel or groove 19, other means for equalizing the pressure may be provided, e.g. a hole that communicates the reaction chamber and the discharge channel. Pressure equalizing means like channel or groove 19 may also be entirely omitted.

## Claims

1. A reaction vessel (1) for performing chemical reactions simultaneously, particularly for use in parallel chemical synthesis or analysis,
said reaction vessel having a body made of a material, particularly a polymeric material, shapable by injection molding, said body comprising
a reaction chamber (3) and a discharge channel (5), said reaction chamber and said discharge channel each having an open upper end (17, 16) and a bottom portion, and
a connection channel (14) that fluidically connects the discharge channel (5) with the space within the reaction chamber (3), where a reaction medium is received,
said reaction vessel being **characterized in that**
said reaction chamber (3) and the discharge channel (5) each extending from its open upper end (17, 16) towards its bottom portion with decreasing cross section,
said connection channel (14) extends between an orifice (7) located near to or at the bottom of the reaction chamber (3) and an orifice (11) located at the lower end (12) of the discharge channel (5), and
said connection channel (14) has a shape that allows retraction of a core used for molding it through the end of the connection channel (14) which is located near to or at the bottom of said reaction chamber (3) or through the end of connection channel (14) which is located at the lower end of said discharge channel (5).

2. A reaction vessel (1) according to claim 1, wherein the reaction chamber (3) has a mean cross-sectional area in a range going from 10 to 1000 square millimeter.

3. A reaction vessel (1) according to claim 2, wherein the reaction chamber (3) has a mean cross-sectional area in a range going from 75 to 120 square millimeter.

4. A reaction vessel (1) according to claim 2, wherein the discharge channel (5) has a cross-sectional area in a range going from 0.8 to 25 square millimeter.

5. A reaction vessel (1) according to claim 2, wherein the vessel has a length in a range going from 20 to 200 millimeter.

6. A reaction vessel (1) according to claim 1, wherein the connection channel (14) begins at the bottom portion of the reaction chamber (3) and leads to the discharge channel (5) with constant or preferably decreasing diameter, so that the core used for molding connection channel (14) may be withdrawn through the reaction chamber.

7. A reaction vessel (1) according to one of the preceding claims, wherein filtering means (10) are inserted in the fluidic connection between the reaction chamber (3) and the discharge channel (5), so that reaction medium exiting from the reaction chamber into the discharge channel (5) has to pass through the filtering means (10).

8. A reaction vessel (1) according to claim 7, wherein said filtering means (10) is a frit.

9. A reaction vessel (1) according to claim 7, wherein the filtering means (10) constitutes a delimitation of the reaction chamber (3).

10. A reaction vessel (1) according to one of the preceding claims, wherein the discharge channel (5) extends substantially parallel to the length axis of the reaction chamber (3).

11. A reaction vessel (1) according to one of the preceding claims, wherein the discharge channel (5) substantially extends within and along a lateral wall of the reaction chamber (3) or on the outer surface thereof.

12. A reaction vessel (1) according to one of one of the preceding claims, wherein said body of the vessel is made of a thermoplastic material.

13. A reaction vessel (1) according to claim 12, wherein said body is made of a polypropylene or a fluorinated polymer like an ethylene-tetrafluoroethylene copolymer.

14. A reaction vessel (1) according to one of the preceding claims, wherein the opening (17) of the reaction chamber (3) and the opening (16) of the discharge channel (5) are interconnected by a channel, hole or groove (19), which equalizes any pressure difference between the reaction chamber (3) and the discharge channel.

15. A reaction vessel (1) according to one of the preceding claims, wherein the upper open ends (17, 16) of the reaction chamber (3) and the discharge channel (5) are located at the upper rim of the reaction vessel.

16. A method for manufacturing a reaction vessel (1) according to claim 1, comprising
making said body of said vessel by injection molding of a polymeric material,
the interior of said discharge channel (5) being shaped by a first core and the interior of the reaction chamber (3) being shaped by a second core,
said first and second core being moved into the mold before injection of said polymeric material and retracted during opening of the mold,
said second core which shapes the reaction chamber (3) bearing a movable extension at the end thereof which forms the bottom of the reaction chamber (3), and said extension touching the first core which shapes the discharge channel (5) when said first and second core are moved into the mold in order to mold said connection channel (14) between said reaction chamber and said discharge channel.

17. Use of a reaction vessel (1) according to one of claims 1 to 15 for performing reactions under overpressure.

18. Use according to claim 17, wherein said overpressure is generated by closing the vessel (1) and increasing the temperature.

19. Use of a reaction vessel (1) according to one of claims 1 to 15 in an arrangement comprising at least 2 reaction vessels for performing in the vessels chemical reaction in parallel.

20. Use according to claim 19, wherein said arrangement comprises a number of reaction vessels (1) which is an integer multiple of 24.

21. Use according to claim 19, wherein the contents of the reaction chamber (3) is removed by applying underpressure to the discharge channel (5) so that said content is sucked off through the discharge channel.

22. A reactor block (21) for performing a multiplicity of chemical reactions simultaneously, particularly for use in parallel synthetic chemistry, comprising
at least two rows of at least two seats (31) for reactions vessels (1),
the reaction vessels having each at least an inlet and an outlet orifice and being reaction vessels (1) according to one of claims 1 to 15,
wherein the reactor block (21) comprises first closure means (55) being each movable in a sliding manner over the inlets and outlets of a number, preferably a row, of reaction vessels situated in the seats into at least one opening position where openings (64, 65) in the first closure means (55) allow access to the inlets and/or outlets, and into a closed position where the inlets and outlets are closed by surface parts (79) of the first closure means (55) resting on the inlets and outlets.

23. A reactor block (21) according to claim 22, wherein the first closure means (55) are each guided in guide means (48) and that the guide means are operably engaged with the first closure means so that the first closure means are pressed against the inlets and outlets of the reaction vessels (1), when they are moved to the closed position.

24. A reactor block (21) according to claim 23, wherein the guide means (48) comprise at least one pair of gates (52), preferable one pair of gates per reaction vessel seat (31), the gates of a pair being arranged substantially adjacent to opposing sides of the respective first closure means (55) and a pin (57) of the first closure means (55) extending into each gate, and that the gates (52) guide the pins in a plane substantially parallel to the inlets and outlets of the reaction vessels (1) while the first closure means is near the opening position, and guide the pins in a direction inclined to this plane near the closing position of the first closure means so that the first closure means if moved to the closing position, is moved towards the inlets and outlets of the reaction vessels for closing them.

25. A parallel reaction assembly comprising a reactor block (21) according to one of claims 22 to 24 with reaction vessels (1) according to one of claims 1 to 15 located in the seats of the reactor block.

26. Use of the parallel reaction assembly of claim 25 for simultaneously performing a chemical reaction in each vessel (1) in the reactor block (21).

## Patentansprüche

1. Reaktionsbehälter (1) zur gleichzeitigen Durchführung von chemischen Reaktionen, insbesondere zur Verwendung in der parallalen chemischen Synthese oder Analyse, wobei das Reaktionsgefäß einen Grundkörper aus einem Material, insbesondere Kunststoffmaterial, hat, das durch Spritzgießen formbar ist, und wobei der Grundkörper umfasst:
eine Reaktionskammer (3) und einen Austrittskanal (5), die beide ein offenes oberes Ende (17,16) und einen Bodenabschnitt haben, und
einen Verbindungskanal (14), der den Austrittskanal (5) für eine Flüssigkeit mit einem Raum in der Reaktionskammer (3) verbindet, indem ein Reaktionsmedium enthalten ist,
**dadurch gekennzeichnet, dass**
sich die Reaktionskammer (3) und der Austrittskanal (5) jeweils von ihrem offenen oberen Ende (17,16) zu ihrem Bodenabschnitt mit einem sich vermindernden Querschnitt erstrecken,
sich der Verbindungskanal (14) zwischen einer Öffnung (7), die nahe oder ab Boden der Reaktionskammer (3) angeordnet ist, und einer Öffnung (11), die an dem unteren Ende (12) des Austrittskanals (5) angeordnet ist, erstreckt, und
der Verbindungskanal eine Form aufweist, die ein Herausziehen eines zum Spritzgießen benötigten Kerns durch das Ende des Verbindungskanals (14), der nahe oder am Boden der Reaktionskammer (3) angeordnet ist, oder durch das Ende des Verbindungskanals (14), das an dem unteren Ende des Austrittskanals (5) angeordnet ist, erlaubt.

2. Reaktionsbehälter (1) nach Anspruch 1, **dadurch gekennzeichnet, dass** die Reaktionskammer (3) eine mittlere Querschnittsfläche in einem Bereich von 10 bis 1000 mm² hat.

3. Reaktionsbehälter (1) nach Anspruch 2, **dadurch gekennzeichnet, dass** die Reaktionskammer (3) eine mittlere Querschnittsfläche in einem Bereich von 75 bis 120 mm² hat.

4. Reaktionsbehälter (1) gemäß Anspruch 2, **dadurch gekennzeichnet, dass** der Austrittskanal (5) eine Querschnittsfläche in einem Bereich von 0,8 bis 25 mm² hat.

5. Reaktionsbehälter (1) nach Anspruch 2, **dadurch gekennzeichnet, dass** der Behälter eine Länge in einem Bereich von 20 bis 200 mm hat.

6. Reaktionsbehälter (1) nach Anspruch 1, **dadurch gekennzeichnet, dass** der Verbindungskanal (14) am Bodenabschnitt der Reaktionskammer (3) beginnt und zu dem Austrittskanal (5) mit einem konstanten oder bevorzugt mit einem sich vermindernden Durchmesser führt, so dass der für das Spritzgießen des Verbindungskanals (14) verwendete Kern durch die Reaktionskammer entnommen werden kann.

7. Reaktionsbehälter (1) gemäß einem der vorhergehenden Ansprüche, **dadurch gekennzeichnet, dass** Filterelemente (10) in die Flüssigkeitsverbindung zwischen der Reaktionskammer (3) und dem Austrittskanal (5) eingeführt sind, so dass ein Reaktionsmedium, das aus der Reaktionskammer in den Austrittskanal (5) austritt, durch das Filterelement (10) hindurchtreten muss.

8. Reaktionsbehälter (1) nach Anspruch 7, **dadurch gekennzeichnet, dass** das Filterelement (10) eine Fritte ist.

9. Reaktionsbehälter (1) nach Anspruch 7, **dadurch gekennzeichnet, dass** das Filterelement (10) eine Begrenzung der Reaktionskammer (3) bildet.

10. Reaktionsbehälter (1) nach einem der vorhergehenden Ansprüche, **dadurch gekennzeichnet, dass** sich der Austrittskanal (5) im wesentlichen parallel zu der Längsachse der Reaktionskammer (3) erstreckt.

11. Reaktionsbehälter (1) nach einem der vorhergehenden Ansprüche, **dadurch gekennzeichnet, dass** sich der Austrittskanal (5) im wesentlichen innerhalb und entlang einer Seitenwand der Reaktionskammer (3) oder an ihrer äußeren Oberfläche erstreckt.

12. Reaktionsbehälter (1) nach einem der vorhergehenden Ansprüche, **dadurch gekennzeichnet, dass** der Grundkörper des Behälters aus einem thermoplastischen Material hergestellt ist.

13. Reaktionsbehälter (1) nach Anspruch 12, **dadurch gekennzeichnet, dass** der Grundkörper aus einem Polypropylen oder einem Fluor-Polymer, wie aus einem Ethylen-Tetrafluorethylene-Copolymer hergestellt ist.

14. Reaktionsbehälter (1) nach einem der vorhergehenden Ansprüche, **dadurch gekennzeichnet, dass** in die Öffnung (17) der Reaktionskammer (3) und die Öffnung (16) des Austrittskanals (5) durch einen Kanal, ein Loch oder eine Nut (19) miteinander verbunden sind, die jede Druckdifferenz zwischen der Reaktionskammer (3) und dem Austrittskanal ausgleicht.

15. Reaktionsbehälter (1) nach einem der vorhergehenden Ansprüche, **dadurch gekennzeichnet, dass** die oberen offenen Enden (17,16) der Reaktionskammer (3) und des Austrittskanals (5) an dem oberen Rand des Reaktionsbehälters angeordnet sind.

16. Verfahren zur Herstellung eines Reaktionsbehälters (1) nach Anspruch 1, umfassend
Herstellen des Grundkörpers des Behälters durch Spritzgießen eines Kunststoffmaterials,
wobei das Innere des Austrittskanals (5) durch einen ersten Kern und das Innere der Reaktionskammer (3) durch einen zweiten Kern geformt wird,
wobei der erste und zweite Kern in die Gussform vor dem Einspritzen des Kunststoffmaterials hineinbewegt und während der Öffnung der Gussform herausgezogen werden,
wobei der zweite Kern, der die Reaktionskammer (3) ausbildet, eine bewegbare Verlängerung an seinem Ende trägt, die den Boden der Reaktionskammer (3) bildet und die den ersten Kern berührt, der den Austrittskanal (5) ausbildet, wenn der erste und zweite Kern in die Gussform bewegt werden, um den Verbindungskanal (14) zwischen der Reaktionskammer und dem Austrittskanal zugießen.

17. Verwendung eines Reaktionsbehälters (1) nach einem der Ansprüche 1 bis 15, um Reaktionen unter Überdruck durchzuführen.

18. Verwendung nach Anspruch 17, **dadurch gekennzeichnet, dass** der Überdruck durch Verschließen des Behälters (1) und Erhöhen der Temperatur gebildet wird.

19. Verwendung eines Reaktionsbehälters (1) nach einem der Ansprüche 1 bis 15 in einer Anordnung, die mindestens zwei Reaktionsbehälter umfasst, um parallele chemische Reaktionen in dem Behälter durchzuführen.

20. Verwendung nach Anspruch 19, **dadurch gekennzeichnet, dass** die Anordnung eine Anzahl von Reaktionsbehältern (1) umfasst, die ein Vielfaches von 24 ist.

21. Verwendung nach Anspruch 19, **dadurch gekennzeichnet, dass** der Inhalt der Reaktionskammer (3) durch Erzeugen eines Unterdrucks in dem Austrittskanal (5) entfernt wird, so dass der Inhalt durch den Austrittskanal (5) herausgesaugt wird.

22. Reaktorblock (21) zur gleichzeitigen Durchführung einer Mehrzahl von chemischen Reaktionen, insbesondere zur Verwendung in der parallelen synthetischen Chemie, umfassend
wenigstens zwei Reihen von wenigstens zwei Aufnahmen (31) für Reaktionsbehälter (1),
wobei die Reaktionsbehälter jeweils wenigstens eine Einlass- und eine Auslassöffnung haben und Reaktionsbehälter (1) nach einem der Ansprüche 1 bis 15 sind,
wobei der Reaktorblock (21) erste Verschlusselemente (55) umfasst, die jeweils gleitend über die Einlässe und Auslässe einer Anzahl, bevorzugt einer Reihe, von Reaktionsbehältern, die in den Aufnahmen angeordnet sind, beweglich sind in wenigstens eine Öffnungsposition, bei der Öffnungen (64,65) in den ersten Verschlusselementen (55) Zugang zu den Einlässen und/oder Auslässen erlauben, und in eine Geschlossenposition, in der die Einlässe und Auslässe durch Oberflächenteile (79) der ersten Verschlusselemente (55) verschlossen sind, die auf den Einlässen und Auslässen ruhen.

23. Reaktorblock (21) nach Anspruch 22, **dadurch gekennzeichnet, dass** die ersten Verschlusselemente (55) jeweils in Führungsmitteln (48) geführt sind und dass die Führungsmittel mit den ersten Verschlusselementen so zusammenwirken, dass die ersten Verschlusselemente gegen die Einlässe und Auslässe der Reaktionsbehälter (1) gepresst werden, wenn sie in die Geschlossenposition bewegt werden.

24. Reaktorblock (21) nach Anspruch 23, **dadurch gekennzeichnet, dass** die Führungsmittel (48) wenigstens ein Paar Tore (52), vorzugsweise ein Paar Tore pro Reaktionsbehälteraufnahme (31), umfasst, wobei die Tore eines Paares im Wesentlichen in der Nachbarschaft der gegenüberliegenden Seiten des entsprechenden ersten Verschlusselements (55) angeordnet sind und ein Stift (57) des ersten Verschlusselements (55) sich in jedes Tor erstreckt, und dass die Tore (52) die Stifte in einer Ebene, die im Wesentlichen parallel zu den Einlässen und Auslässen der Reaktionsbehälter (1) ist, führen, während das erste Verschlusselement in der Nähe der Öffnungsposition ist und die Stifte in der Nähe der Verschlussposition des ersten Verschlusselements in einer schräg zu dieser Ebenen verlaufenden Richtung führt, so dass das erste Verschlusselement, wenn es zu der Geschlossenposition bewegt wird, gegen die Einlässe und Auslässe der Reaktionsbehälter bewegt wird, um diese zu verschließen.

25. Parallele Reaktionsanordnung umfassend einen Reaktorblock (21) nach einem der Ansprüche 22 bis 24 mit Reaktionsbehältern (1) nach einem der Ansprüche 1 bis 15, die in den Aufnahmen des Reaktorblocks angeordnet sind.

26. Verwendung der parallelen Reaktionsanordnung nach Anspruch 25 zur gleichzeitigen Durchführung einer chemischen Reaktion in jedem Behälter (1) in dem Reaktorblock (21).

## Revendications

1. Récipient de réaction (1) destiné à exécuter simultanément des réactions chimiques, particulièrement destiné pour la synthèse ou l'analyse chimique en parallèle,
ledit récipient de réaction ayant un corps fait d'un matériau, en particulier d'un matériau polymère, formable par moulage par injection, ledit corps comprenant
une chambre de réaction (3) et un canal d'évacuation (5), ladite chambre de réaction et ledit canal d'évacuation ayant chacun une extrémité supérieure ouverte (17, 16) et une partie inférieure, et
un canal connecteur (14) qui met en communication fluidique le canal d'évacuation (5) et l'espace situé à l'intérieur de la chambre de réaction (3), où est reçu un milieu réactionnel,
ledit récipient de réaction étant **caractérisé en ce que**
ladite chambre de réaction (3) et le canal d'évacuation (5) s'étendent chacun depuis son extrémité supérieure ouverte (17, 16) vers sa partie inférieure avec une coupe transversale qui se réduit progressivement,
ledit canal connecteur (14) s'étend entre un orifice (7) positionné à proximité ou au niveau du fond de la chambre de réaction (3) et un orifice (11) positionné à l'extrémité inférieure (12) du canal d'évacuation (5), et
ledit canal connecteur (14) a une forme qui permet la rétraction d'un noyau utilisé pour son moulage, à travers l'extrémité du canal connecteur (14) qui est positionnée à proximité ou au niveau du fond de la chambre de réaction (3), ou à travers l'extrémité du canal connecteur (14) qui est positionnée au niveau de l'extrémité inférieure dudit canal d'évacuation (5).

2. Récipient de réaction (1) selon la revendication 1, dans lequel la chambre de réaction (3) a une superficie moyenne de coupe transversale dans une plage allant de 10 à 1.000 millimètres carrés.

3. Récipient de réaction (1) selon la revendication 2, dans lequel la chambre de réaction (3) a une superficie moyenne de coupe transversale dans une plage allant de 75 à 120 millimètres carrés.

4. Récipient de réaction (1) selon la revendication 2, dans lequel le canal d'évacuation (5) a une superficie de coupe transversale dans une plage allant de 0,8 à 25 millimètres carrés.

5. Récipient de réaction (1) selon la revendication 2, dans lequel le récipient a une longueur dans une plage allant de 20 à 200 millimètres.

6. Récipient de réaction (1) selon la revendication 1, dans lequel le canal connecteur (14) commence au niveau de la partie inférieure de la chambre de réaction (3) et mène au canal d'évacuation (5) avec un diamètre constant ou de préférence décroissant, de sorte que le noyau utilisé pour mouler le canal connecteur (14) puisse être retiré à travers la chambre de réaction.

7. Récipient de réaction (1) selon l'une quelconque des revendications précédentes, dans lequel des moyens de filtrage (10) sont insérés dans la connexion fluidique entre la chambre de réaction (3) et le canal d'évacuation (5), de sorte que le milieu réactionnel quittant la chambre de réaction pour aller à l'intérieur du canal d'évacuation (5) doive passer à travers les moyens de filtrage (10).

8. Récipient de réaction (1) selon la revendication 7, dans lequel lesdits moyens de filtrage (10) sont une fritte.

9. Récipient de réaction (1) selon la revendication 7, dans lequel les moyens de filtrage (10) constituent une délimitation de la chambre de réaction (3).

10. Récipient de réaction (1) selon l'une quelconque des revendications précédentes, dans lequel le canal d'évacuation (5) s'étend de manière sensiblement parallèle à l'axe longitudinal de la chambre de réaction (3).

11. Récipient de réaction (1) selon l'une quelconque des revendications précédentes, dans lequel le canal d'évacuation (5) s'étend sensiblement à l'intérieur et le long d'une paroi latérale de la chambre de réaction (3) ou sur la surface externe de celle-ci.

12. Récipient de réaction (1) selon l'une quelconque des revendications précédentes, dans lequel ledit corps du récipient est fait d'un matériau thermoplastique.

13. Récipient de réaction (1) selon la revendication 12, dans lequel ledit corps est fait d'un polypropylène ou d'un polymère fluoré comme un copolymère d'éthylène-tétrafluoroéthylène.

14. Récipient de réaction (1) selon l'une quelconque des revendications précédentes, dans lequel l'ouverture (17) de la chambre de réaction (3) et l'ouverture (16) du canal d'évacuation (5) sont interconnectées par un canal, un orifice ou une rainure (19), qui égalise toute différence de pression entre la chambre de réaction (3) et le canal d'évacuation.

15. Récipient de réaction (1) selon l'une quelconque des revendications précédentes, dans lequel les extrémités supérieures ouvertes (17, 16) de la chambre de réaction (3) et du canal d'évacuation (5) sont positionnées au niveau de la bordure supérieure du récipient de réaction.

16. Procédé de fabrication d'un récipient de réaction (1) selon la revendication 1, comprenant les étapes consistant à
fabriquer ledit corps dudit récipient par moulage par injection à partir d'un matériau polymère,
l'intérieur dudit canal d'évacuation (5) étant formé par un premier noyau et l'intérieur de la chambre de réaction (3) étant formé par un second noyau,
lesdits premier et second noyaux étant déplacés dans le moule avant l'injection dudit matériau polymère et rétractés au cours de l'ouverture du moule,
ledit second noyau qui forme la chambre de réaction (3) supportant une extension mobile à l'extrémité de celui-ci qui forme le fond de la chambre de réaction (3), et ladite extension touchant le premier noyau qui forme le canal d'évacuation (5) lorsque ledit premier et second noyau sont déplacés dans le moule afin de mouler ledit canal connecteur (14) entre ladite chambre de réaction et ledit canal d'évacuation.

17. Utilisation d'un récipient de réaction (1) selon l'une des revendications 1 à 15 pour exécuter des réactions sous surpression.

18. Utilisation selon la revendication 17, dans laquelle ladite surpression est générée en fermant le récipient (1) et en augmentant la température.

19. Utilisation d'un récipient de réaction (1) selon l'une des revendications 1 à 15, en un agencement comprenant au moins deux récipients de réaction pour exécuter dans les récipients une réaction chimique en parallèle.

20. Utilisation selon la revendication 19, dans laquelle ledit agencement comprend un certain nombre de récipients de réaction (1) qui est un multiple entier de 24.

21. Utilisation selon la revendication 19, dans laquelle le contenu de la chambre de réaction (3) est retiré en appliquant une sous-pression au canal d'évacuation (5) de telle façon que ledit contenu soit aspiré à travers le canal d'évacuation.

22. Bloc de réaction (21) destiné à exécuter une multitude de réactions chimiques simultanément, particulièrement destiné à la chimie de synthèse en parallèle, comprenant
au moins deux rangées d'au moins deux sièges (31) pour des récipients de réaction (1),
les récipients de réaction ayant chacun au moins un orifice d'entrée et un orifice de sortie et étant des récipients de réaction (1) selon l'une des revendications 1 à 15,
dans lequel le bloc de réaction (21) comprend de premiers moyens de fermeture (55) pouvant chacun se déplacer d'une manière coulissante au-dessus des entrées et sorties d'un certain nombre, de préférence une rangée, de récipients de réaction positionnés dans les sièges, dans au moins une position d'ouverture dans laquelle des ouvertures (64, 65) dans les premiers moyens de fermeture (55) ouvrent l'accès vers les entrées et/ou les sorties, et dans une position fermée dans laquelle les entrées et les sorties sont fermées par des pièces de surface (79) des premiers moyens de fermeture (55) reposant sur les entrées et les sorties.

23. Bloc de réaction (21) selon la revendication 22, dans lequel les premiers moyens de fermeture (55) sont guidés chacun dans des moyens de guidage (48), et dans lequel les moyens de guidage sont en prise de manière opérationnelle avec les premiers moyens de fermeture, de telle façon que les premiers moyens de fermeture soient poussés contre les entrées et les sorties des récipients de réaction (1), lorsqu'ils sont déplacés vers la position fermée.

24. Bloc de réaction (21) selon la revendication 23, dans lequel les moyens de guidage (48) comprennent au moins une paire d'opercules (52), de préférence une paire d'opercules par siège de récipient de réaction (31), les opercules d'une paire étant disposés de manière sensiblement adjacente aux côtés opposés des premiers moyens de fermeture respectifs (55) et une tige (57) des premiers moyens de fermeture (55) s'étendant à l'intérieur de chaque opercule, et dans lequel les opercules (52) guident les tiges dans un plan sensiblement parallèle aux entrées et aux sorties des récipients de réaction (1), pendant que les premiers moyens de fermeture sont proches de la position d'ouverture, et ils guident les tiges dans un sens incliné par rapport à ce plan près de la position de fermeture des premiers moyens de fermeture, de sorte que les premiers moyens de fermeture, s'ils sont déplacés vers la position de fermeture, soient déplacés vers les entrées et les sorties des récipients de réaction pour les fermer.

25. Ensemble de réaction en parallèle, comprenant un bloc de réaction (21) selon l'une des revendications 22 à 24, avec des récipients de réaction (1) selon l'une des revendications 1 à 15 positionnés dans les sièges du bloc de réaction.

26. Utilisation de l'ensemble de réaction en parallèle selon la revendication 25 pour exécuter simultanément une réaction chimique dans chaque récipient (1) dans le bloc de réaction (21).
